# EUROPÄISCHE PATENTSCHRIFT

(11) **EP 0 532 929 B1**
(45) Veröffentlichungstag und Bekanntmachung des Hinweises auf die Patenterteilung: **27.09.1995**
(21) Anmeldenummer: 92114193.3
(22) Anmeldetag: 20.08.1992
(51) Int. Cl.: C22C 9/01, C22C 9/04, G02C 5/00, A44C 5/00, A44C 7/00, A44C 9/00, A44B 1/00, A44B 11/00

(54) **Legierung, insbesondere zur Verwendung zur Herstellung von Schmuck, Brillengestellen etc.**
Alloy, especially for use in the manufacture of jewellery, spectacle frames etc.
Alliage notamment utilisé pour la fabrication de bijoux, de montures de lunettes et d'autres encore

(30) Priorität: 20.09.1991 DE 4131426
(43) Veröffentlichungstag der Anmeldung: 24.03.1993
(73) Patentinhaber: Berkenhoff GmbH, D-35452 Heuchelheim (DE)
(72) Erfinder: Brandstätter, Wolfgang, Dipl.-Ing., D-6370 Oberursel 4 (DE); Fackert, Jürgen, D-6356 Steffenberg (DE); Rechtziegel, Bruno, D-6301 Heuchelheim (DE); Tauber, Klaus, D-6301 Biebertal 1 (DE)
(74) Vertreter: Missling, Arne, Dipl.-Ing.

(56) Entgegenhaltungen:
- EP-A- 0 119 501
- DE-A- 3 626 435
- DE-U- 9 017 408
- US-A- 3 998 633
- US-A- 4 493 736

## Beschreibung

Die Erfindung bezieht sich auf eine Legierung, welche insbesondere zur Herstellung von Schmuckwaren, Brillengestellen, für am Körper zu tragende bzw. an Kleidungsstücken angebrachte Metallteile und Zahnbürsten etc. verwendet wird. Weiterhin betrifft die Erfindung Schmuckstücke und Brillengestelle, welche unter Verwendung der Legierung hergestellt wurden, sowie Zwischenprodukte und Vormaterialien, beispielsweise Brillendraht, zur Herstellung der Schmuckwaren und Brillengestelle oder deren Teile.

Bei der Herstellung von Schmuckwaren, Brillengestellen, am Körper zu tragenden Metallteilen oder ähnlichem müssen unterschiedliche Kriterien erfüllt sein, um das Produkt in der Praxis einsetzen zu können. Zum einen müssen die hergestellten Erzeugnisse eine ausreichende Festigkeit aufweisen, zum anderen ist den optischen Anforderungen Genüge zu leisten. Die Probleme der Festigkeit stellen sich insbesondere bei Brillengestellen, beispielsweise bei den Einfassungen der Gläser oder den Bügeln. Auch für sonstige Schmuckwaren, beispielsweise Broschen, Ringe, Ohrringe, Ketten, Bänder oder ähnliches ist es unumgänglich, daß die Legierung vorgegebene Festigkeitswerte aufweist, um mechanische Beschädigungen zu vermeiden. Weiterhin müssen für bestimmte Anwendungszwecke zusätzliche physikalische Eigenschaften erfüllt sein, beispielsweise hinsichtlich der Wärmeleitfähigkeit, des Längenausdehnungskoeffizienten, des elektrischen Widerstandes und der elektrischen Leitfähigkeit. Ein weiteres Kriterium für die Auswahl einer derartigen Legierung ist deren Herstellbarkeit. Die Legierung soll sowohl einfach vergießbar sein, um die erforderlichen Rohlinge beispielsweise durch Stranggießen oder Gießen in Formen herzustellen, als auch umformbar sein, um aus der Legierung beispielsweise Stangen, Drähte, Bänder oder ähnliches erzeugen zu können. Legierungen, welche die oben genannten Anforderungen teilweise oder vollständig erfüllen, sind beispielsweise in dem Gebrauchsmuster 90 17 408.9 oder der DE-OS 38 34 186 beschrieben. Auch die DE-PS 26 26 251 beschreibt eine derartige Legierung.

Die genannten Legierungen zeichnen sich insgesamt dadurch aus, daß sie einen relativ hohen Nickelanteil enthalten. Dieser Nickelanteil ist bei Schmuckstücken, Brillengestellen und ähnlichen Artikeln, welche auf der blanken Haut getragen werden, in zunehmendem Maße unerwünscht, da eine Vielzahl von Menschen eine Nickelallergie haben. Unter anderem bedingt durch die zunehmende Umweltbelastung erhöht sich der Prozentsatz der Bevölkerung, welche von derartigen Allergien betroffen ist, zunehmend, so daß nickelenthaltende Legierungen bei den Kunden verstärkt auf Ablehnung stoßen. In einigen Fällen kann durch Beschichtungen oder Umhüllungen Abhilfe geschaffen werden, bei den meisten Anwendungsfällen ist dies jedoch nicht möglich.

Der Erfindung liegt die Aufgabe zugrunde, eine Legierung der eingangs genannten Art zu schaffen, welche bei kostengünstiger Herstellbarkeit, einfacher Verarbeitbarkeit und hohen mechanischen Festigkeiten keinen Nickelanteil aufweist.

Die Aufgabe wird erfindungsgemäß gelöst durch eine Legierung, welche, in Gewichtsprozenten, folgende Zusammensetzung aufweist: 86,0 - 90,0 Prozent Kupfer, 2,8 - 4,5 Prozent Aluminium, 0,4 - 1,3 Prozent Mangan, 1,0 - 2,5 Prozent Eisen, 0 - 0,5 Prozent Silizium, Rest Zink.

Die erfindungsgemäße Legierung zeichnet sich durch eine Reihe erheblicher Vorteile aus. Erfindungsgemäß wurde erstmals eine Legierung geschaffen, welche sehr gute mechanische Festigkeiten und eine gute Korrosiosbeständigkeit aufweist, in üblicher Weise verarbeitbar ist und keinen Nickelanteil aufweist. Die erfindungsgemäße Legierung ist somit insbesondere für Schmuckstücke, Brillengestelle oder ähnliches verwendbar, ohne daß bei den Trägern oder Benutzern Nickelallergien auftreten können. Erfindungsgemäß erübrigen sich bei den fertigen Produkten somit sämtliche zusätzlichen, aus dem Stand der Technik bekannten Schutzmaßnahmen, wie beispielsweise Beschichtungen, Lackierungen oder ähnliches, mit denen ein direkter Kontakt der vorbekannten nickelhaltigen Legierungen mit der Haut vermieden werden soll. Die erfindungsgemäße Legierung ermöglicht somit eine einfache, kostengünstige Herstellung der entsprechenden Produkte. Andererseits eignet sich diese Legierung auch für nicht nickelhaltige Beschichtungen, z. B. zur Dekorationszwecken.

Die erfindungsgemäße Legierung zeichnet sich insbesondere durch eine gute Kaltumformbarkeit und sehr gute Federeigenschaften aus. Auch die Verarbeitbarkeit, beispielsweise durch Hartlöten oder Schweißen ist gut. Ebenso sind sehr gute Werte für die Zugfestigkeit (im federharten Zustand 970 - 1030 N/mm2) sowie gute Härtewerte von bis zu 280 HV zu verzeichnen.

In einer besonders bevorzugten Ausgestaltungsform der Erfindung ist vorgesehen, daß die Legierung folgende Zusammensetzung, in Gewichtsprozenten, aufweist: 86,0 - 88,0 Prozent Kupfer, 3,8 - 4,2 Prozent Aluminium, 0,7 - 1,0 Prozent Mangan, 1,0 - 1,3 Prozent Eisen, 0 Prozent Silizium, Rest Zink. Bevorzugt kann auch folgende Zusammensetzung sein: 87,0 - 89,0 Prozent Kupfer, 3,6 - 4,0 Prozent Aluminium, 0,7 - 1,0 Prozent Mangan, 1,7 - 2,0 Prozent Eisen, 0,3 - 0,5 Prozent Silizium, Rest Zink (alle Angaben in Gewichtsprozent). In einer weiteren vorteilhaften Weiterbildung der Erfindung weist die Legierung folgende Zusammensetzung auf (in Gewichtsprozenten): 86,0 - 88,0 Prozent Kupfer, 4,0 - 4,4 Prozent Aluminium, 0,8 - 1,1 Prozent Mangan, 1,8 - 2,1 Prozent Eisen, 0 Prozent Silizium, Rest Zink.

Zusätzlich zu den oben genannten Vorteilen sind bei den erfindungsgemäßen Legierungen sehr gute Federeigenschaften zu verzeichnen, ebenso wie gute Werte für die Korrosionsbeständigkeit. Die Legierungen sind somit insbesondere für die Herstellung von Brillengestellen besonders geeignet.

Die Erfindung ist nicht auf die beschriebenen Legierungszusammensetzungen beschränkt, vielmehr ergeben sich für den Fachmann im Rahmen der Erfindung vielfältige Abwandlungs- und Modifikationsmöglichkeiten.

## Patentansprüche

1. Legierung, insbesondere zur Verwendung zur Herstellung von Schmuckwaren, Brillengestellen, für am Körper zu tragende bzw. an Kleidungsstücken angebrachte Metallteile und Zahnbürsten etc., gekennzeichnet durch folgende Zusammensetzung in Gewichtsprozenten:
| | |
|---|---|
| Cu | 86,0 - 90,0 % |
| Al | 2,8 - 4,5 % |
| Mn | 0,4 - 1,3 % |
| Fe | 1,0 - 2,5 % |
| Si | 0 - 0,5 % |
| Zn | Rest. |

2. Legierung, insbesondere zur Verwendung zur Herstellung von Schmuckwaren und Brillengestellen, gekennzeichnet durch folgende Zusammensetzung in Gewichtsprozenten:
| | |
|---|---|
| Cu | 86,0 - 88,0 % |
| Al | 3,8 - 4,2 % |
| Mn | 0,7 - 1,0 % |
| Fe | 1,0 - 1,3 % |
| Si | 0 % |
| Zn | Rest. |

3. Legierung, insbesondere zur Verwendung zur Herstellung von Schmuckwaren und Brillengestellen, gekennzeichnet durch folgende Zusammensetzung in Gewichtsprozenten:
| | |
|---|---|
| Cu | 87,0 - 89,0 % |
| Al | 3,6 - 4,0 % |
| Mn | 0,7 - 1,0 % |
| Fe | 1,7 - 2,0 % |
| Si | 0,3 - 0,5 % |
| Zn | Rest. |

4. Legierung, insbesondere zur Verwendung zur Herstellung von Schmuckwaren und Brillengestellen, gekennzeichnet durch folgende Zusammensetzung in Gewichtsprozenten:
| | |
|---|---|
| Cu | 86,0 - 88,0 % |
| Al | 4,0 - 4,4 % |
| Mn | 0,8 - 1,1 % |
| Fe | 1,8 - 2,1 % |
| Si | 0 % |
| Zn | Rest. |

5. Schmuckwaren, hergestellt unter Verwendung einer Legierung nach einem der Ansprüche 1 - 4.

6. Brillengestell oder dessen Teile, hergestellt unter Verwendung einer Legierung nach einem der Ansprüche 1 - 4.

7. Metallteile für Kleidungsstücke, hergestellt unter Verwendung einer Legierung nach einem der Ansprüche 1 - 4.

8. Zwischenprodukt oder Vormaterial, insbesondere Draht-, Band- oder Stangenmaterial, hergestellt unter Verwendung einer Legierung nach einem der Ansprüche 1 - 4.

## Claims

1. An alloy, particularly to be used for manufacturing jewellery, spectacle frames, for metal parts which are to be worn on the body or are attached to articles of clothing and for toothbrushes etc., characterised by the following composition in percentages by weight:
| | |
|---|---|
| Cu | 86.0 - 90.0 % |
| Al | 2.8 - 4.5 % |
| Mn | 0.4 - 1.3 % |
| Fe | 1.0 - 2.5 % |
| Si | 0 - 0.5 % |
| Zn | Remainder. |

2. An alloy, particularly to be used for manufacturing jewellery and spectacle frames, characterised by the following composition in percentages by weight:
| | |
|---|---|
| Cu | 86.0 - 88.0 % |
| Al | 3.8 - 4.2 % |
| Mn | 0.7 - 1.0 % |
| Fe | 1.0 - 1.3 % |
| Si | 0 % |
| Zn | Remainder. |

3. An alloy, particularly to be used for manufacturing jewellery and spectacle frames, characterised by the following composition in percentages by weight:
| | |
|---|---|
| Cu | 87.0 - 89.0 % |
| Al | 3.6 - 4.0 % |
| Mn | 0.7 - 1.0 % |
| Fe | 1.7 - 2.0 % |
| Si | 0.3 - 0.5 % |
| Zn | Remainder. |

4. An alloy, particularly to be used for manufacturing jewellery and spectacle frames, characterised by the following composition in percentages by weight:
| | |
|---|---|
| Cu | 86.0 - 88.0 % |
| Al | 4.0 - 4.4 % |
| Mn | 0.8 - 1.1 % |
| Fe | 1.8 - 2.1 % |
| Si | 0 % |
| Zn | Remainder. |

5. Jewellery manufactured using an alloy in accordance with any one of Claims 1 - 4.

6. A spectacle frame or parts thereof, manufactured using an alloy in accordance with any one of Claims 1 - 4.

7. Metal parts for articles of clothing, manufactured using an alloy in accordance with any one of Claims 1 - 4.

8. An intermediate product or starting material, in particular wires, strips or bars, manufactured using an alloy in accordance with any one of Claims 1 - 4.

## Revendications

1. Alliage, destiné à être utilisé notamment pour la fabrication de bijoux, de montures de lunettes, d'objets métalliques destinés à être portés sur le corps ou appliqués sur des pièces de vêtement, et de brosses à dents, etc., caractérisé en ce qu'il a la composition suivante, en % en poids :
| | |
|---|---|
| Cu | 86,0 - 90,0 % |
| Al | 2,8 - 4,5 % |
| Mn | 0,4 - 1,3 % |
| Fe | 1,0 - 2,5 % |
| Si | 0 - 0,5 % |
| Zn = reste. | |

2. Alliage, destiné à être utilisé notamment pour la fabrication de bijoux et de montures de lunettes, caractérisé en ce qu'il a la composition suivante, en % en poids
| | |
|---|---|
| Cu | 86,0 - 88,0 % |
| Al | 3,8 - 4,2 % |
| Mn | 0,7 - 1,0 % |
| Fe | 1,0 - 1,3 % |
| Si | 0 % |
| Zn = reste. | |

3. Alliage, destiné à être utilisé notamment pour la fabrication de bijoux et de montures de lunettes, caractérisé en ce qu'il a la composition suivante, en % en poids :
| | |
|---|---|
| Cu | 87,0 - 89,0 % |
| Al | 3,6 - 4,0 % |
| Mn | 0,7 - 1,0 % |
| Fe | 1,7 - 2,0 % |
| Si | 0,3 - 0,5 % |
| Zn = reste. | |

4. Alliage, destiné à être utilisé notamment pour la fabrication de bijoux et de montures de lunettes, caractérisé en ce qu'il a la composition suivante, en % en poids :
| | |
|---|---|
| Cu | 86,0 - 88,0 % |
| Al | 4,0 - 4,4 % |
| Mn | 0,8 - 1,1 % |
| Fe | 1,8 - 2,1 % |
| Si | 0 % |
| Zn = reste. | |

5. Bijoux fabriqués en utilisant un alliage selon l'une des revendications 1 à 4.

6. Monture de lunettes, ou parties de celle-ci, fabriquées en utilisant un alliage selon l'une des revendications 1 à 4.

7. Pièces métalliques pour vêtements, fabriquées en utilisant un alliage selon l'une des revendications 1 à 4.

8. Produit intermédiaire ou produit de départ, notamment matériau en fil métallique, en bande ou en barre, fabriqué en utilisant un alliage selon l'une des revendications 1 à 4.
